# EUROPEAN PATENT APPLICATION

(11) **EP 4 761 158 A1**
(43) Date of publication of application: **17.06.2026**
(21) Application number: 23948075.9
(22) Date of filing: 10.08.2023
(51) Int. Cl.: H04L 5/00, H04W 36/00, H04W 24/10

(54) **DATA SENDING METHOD AND APPARATUS, AND DATA RECEIVING METHOD AND APPARATUS**

(71) Applicant: 1FINITY Inc., Kawasaki-shi, Kanagawa 211-8588 (JP)
(72) Inventor: AKIMOTO, Yosuke, Kawasaki-shi, Kanagawa 211--8588 (JP); JIA, Meiyi, Beijing 100022 (CN); SUN, Gang, Beijing 100022 (CN); ZHANG, Jian, Beijing 100022 (CN)
(74) Representative: Haseltine Lake Kempner LLP
(86) International application number: PCT/CN2023/112289
(87) International publication number: WO 2025/030501

(57) **Abstract**

Embodiments of this disclosure provide a data transmission, data reception method and apparatuses thereof. The method includes: receiving first configuration information and second configuration information by a terminal equipment, wherein the first configuration information includes first reference signal position information of one or more candidate cells; and transmitting a channel state information report according to the first configuration information and/or the second configuration information, wherein in a case where it is configured to include a measurement of a special cell in the channel state information report, the channel state information report includes or does not include the measurement of the special cell. Therefore, occurrence of indefinite equipment behaviors resulted from configuration conflicts may be avoided, and inconsistent understandings of CSI report contents by the terminal equipment and the network device may be avoided, thereby avoiding transmission failure of the CSI report.

## Description

### Technical Field

This disclosure relates to the field of communication technologies.

### Background

Layer 1/layer 2 triggered mobility (LTM) has been studied by the 3GPP standard organization in Release 18 (Rel-18). For the Rel-18 LTM, the goal is to reduce the time needed in hand over interruption via cell switch based on layer 1/layer 2 signaling, thereby enabling faster switch from a serving cell (source cell) to a target cell.

It should be noted that the above description of the background is merely provided for clear and complete explanation of this disclosure and for easy understanding by those skilled in the art. And it should not be understood that the above technical solution is known to those skilled in the art as it is described in the background art of this disclosure.

### Summary

Layer 1/layer 2 triggered mobility (LTM) has been studied in Rel-18. For the Rel-18 LTM, the goal is to reduce the time needed in hand over interruption via cell switch based on layer 1/layer 2 signaling, thereby enabling faster switch from a serving cell (source cell) to a target cell. The target cell is a cell after switch, which may be a serving cell, or may be a non-serving cell. The hand over interruption refers to a time from the terminal equipment receives a cell switch command to the time when the terminal equipment successfully performing uplink or downlink transmission for the first time with the target cell. Compared to legacy cell switch based on layer 3 signaling, cell switch based on layer 1/layer 2 signaling is able to further reduce hand over interruption. To achieve cell switch based on layer 1/layer 2 signaling, a terminal equipment measures multiple candidate cells, such as measuring layer 1 reference signal received power (L1-RSRP) of a synchronization signal block (SSB), and reports measurement results to a source cell, such as transmitting a channel state information (CSI) report, and the source cell indicates to the terminal equipment via a cell switch command which candidate cell to switch (the indicated candidate cell becomes a target cell), and indicates beams used for uplink and downlink transmission on the target cell after the switch, which is, for example, a transmission configuration indication (TCI) state, wherein all of the source cell, candidate cell and target cell in Rel-18 LTM support the unified TCI state in Rel-17. Therefore, the TCI state indicated above is a unified TCI state.

In addition, in Rel-18 LTM, candidate cell configuration, measurement configuration and reporting configuration (CSI reporting configuration) are provided by the source cell to the terminal equipment before the cell switch command. The candidate cell configuration includes a radio resource control (RRC) configuration applied by the terminal equipment after being switched to the target cell, i.e. an RRC configuration of the target cell. The terminal equipment may immediately apply the RRC configuration of the target cell after the cell switch, thereby quickly completing successful uplink or downlink transmission with the target cell. The measurement configuration mainly includes a configuration of measurement reference signals (such as SSBs), and the CSI reporting configuration is used to configure information needed in reporting. For a specific RRC signaling structure, for example, the CSI reporting configuration is included in a serving cell configuration, while the measurement configuration is contained outside of the serving cell configuration and a candidate cell configuration.

It was found by the inventors that a terminal equipment is configured with measurement configuration information and CSI report configuration information. As the two are separately configured, the following configuration conflicts may occur: according to the CSI report configuration, the terminal equipment needs to include measurement of SSBs of a SpCell in the CSI report, however, the measurement configuration does not configure the SSBs of the SpCell for the terminal equipment, therefore, the terminal equipment is unable to measure the SSBs of the SpCell. Such configuration conflicts will lead to indefinite equipment behaviors when the terminal equipment transmits the CSI report, thereby resulting in transmission failure of the CSI report.

In order to solve at least one of the above problems, embodiments of this disclosure provide a data transmission, data reception method and apparatuses thereof.

According to one aspect of the embodiments of this disclosure, there is provided a data transmission method, applicable to a terminal equipment, the method including:
receiving first configuration information and second configuration information, wherein the first configuration information includes first reference signal position information of one or more candidate cells; and
transmitting a CSI report according to the first configuration information and/or the second configuration information, wherein in a case where it is configured to include a measurement of a special cell (SpCell) in the CSI report, the CSI report includes or does not include measurement of the special cell (SpCell).

According to another aspect of the embodiments of this disclosure, there is provided a data reception method, applicable to a network device, the method including:
transmitting first configuration information and second configuration information to a terminal equipment, wherein the first configuration information includes first reference signal position information of one or more candidate cells; and
receiving a CSI report transmitted by the terminal equipment according to the first configuration information and/or the second configuration information, wherein in a case where the terminal equipment is configured to include a measurement of a special cell (SpCell) in the CSI report, the CSI report includes or does not include measurement of the special cell (SpCell).

According to a further aspect of the embodiments of this disclosure, there is provided a data transmission apparatus, configured in a terminal equipment, wherein the data transmission apparatus includes:
a first receiving unit configured to receive first configuration information and second configuration information, wherein the first configuration information includes first reference signal position information of one or more candidate cells; and
a first transmitting unit configured to transmit a channel state information report according to the first configuration information and/or the second configuration information, wherein in a case where it is configured to include a measurement of a special cell in the channel state information report, the channel state information report includes or does not include measurement of the special cell.

According to still another aspect of the embodiments of this disclosure, there is provided a data reception apparatus, configured in a network device, the data reception apparatus including:
a second transmitting unit configured to transmit first configuration information and second configuration information to a terminal equipment, wherein the first configuration information includes first reference signal position information of one or more candidate cells; and
a second receiving unit configured to receive a channel state information report transmitted by the terminal equipment according to the first configuration information and/or the second configuration information, wherein in a case where the terminal equipment is configured to include a measurement of a special cell in the channel state information report, the channel state information report includes or does not include measurement of the special cell.

According to yet another aspect of the embodiments of this disclosure, there is provided a communication system, including:
a network device configured to transmit first configuration information and second configuration information, wherein the first configuration information includes first reference signal position information of one or more candidate cells; and
a terminal equipment configured to receive the first configuration information and second configuration information; and transmit a CSI report according to the second configuration information, wherein in a case where it is configured to include a measurement of a special cell (SpCell) in the CSI report, the CSI report includes or does not include measurement of the special cell (SpCell).

An advantage of the embodiments of this disclosure exists in that the terminal equipment receives the first configuration information and second configuration information, wherein the first configuration information includes first reference signal position information of one or more candidate cells; and transmits a channel state information report according to the first configuration information and/or the second configuration information, wherein in a case where it is configured to include a measurement of a special cell in the channel state information report, the channel state information report includes or does not include measurement of the special cell. Therefore, occurrence of indefinite equipment behaviors resulted from configuration conflicts may be avoided, and inconsistent understandings of CSI report contents by the terminal equipment and the network device may be avoided, thereby avoiding transmission failure of the CSI report.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprise/comprising/include/including" when used in this specification is taken to specify the presence of stated features, integers, steps or components but does not preclude the presence or addition of one or more other features, integers, steps, components or groups thereof.

### Brief Description of the Drawings

Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiments.
FIG. 1 is schematic diagram of a communication system of the embodiments of this disclosure;
FIG. 2 is a schematic diagram of a data transmission method of the embodiments of this disclosure;
FIG. 3 is an exemplary diagram of a CSI report configuration of the embodiments of this disclosure;
FIG. 4 is an exemplary diagram of the CSI report of the embodiments of this disclosure;
FIG. 5 is another exemplary diagram of the configuration of the CSI report of the embodiments of this disclosure;
FIG. 6 is another exemplary diagram of the CSI report of the embodiments of this disclosure;
FIG. 7 is an exemplary diagram of a first interval of the embodiments of this disclosure;
FIG. 8 is another exemplary diagram of the first interval of the embodiments of this disclosure;
FIG. 9 is a schematic diagram of a data reception method of the embodiments of this disclosure;
FIG. 10 is a schematic diagram of a data transmission apparatus of the embodiments of this disclosure;
FIG. 11 is a schematic diagram of a data reception apparatus of the embodiments of this disclosure;
FIG. 12 is a schematic diagram of a structure of a network device of the embodiments of this disclosure; and
FIG. 13 is a schematic diagram of a terminal equipment of the embodiments of this disclosure.

### Detailed Description

These and further aspects and features of this disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the spirit and terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and highspeed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, 5G and new radio (NR), etc., and/or other communication protocols that are currently known or will be developed in the future.

In the embodiments of this disclosure, the term "network device", for example, refers to a device in a communication system that accesses a user equipment to the communication network and provides services for the user equipment. The network device may include but not limited to the following devices: a base station (BS), an access point (AP), a transmission reception point (TRP), a broadcast transmitter, a mobile management entity (MME), a gateway, a server, a radio network controller (RNC), a base station controller (BSC), etc.

The base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. And a term "cell" may refer to a base station and/or its coverage area, depending on a context of the term.

In the embodiments of this disclosure, the term "user equipment (UE)" or "terminal equipment (TE) or terminal device" refers to, for example, an equipment accessing to a communication network and receiving network services via a network device. The user equipment may be fixed or mobile, and may also be referred to as a mobile station (MS), a terminal, a subscriber station (SS), an access terminal (AT), or a station, etc.

The terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc., the terminal equipment may also be a machine or a device performing monitoring or measurement. For example, it may include but not limited to a machine-type communication (MTC) terminal, a vehicle mounted communication terminal, an industrial wireless device, a surveillance camera, a device to device (D2D) terminal, and a machine to machine (M2M) terminal, etc.

Moreover, the term "network side" or "network device side" refers to a side of a network, which may be a base station or one or more network devices including those described above. The term "user side" or "terminal side" or "terminal equipment side" refers to a side of a user or a terminal, which may be a UE, and may include one or more terminal equipments described above. "A device" may refer to a network device, and may also refer to a terminal equipment.

Scenarios in the embodiments of this disclosure shall be described below by way of examples; however, this disclosure is not limited thereto.

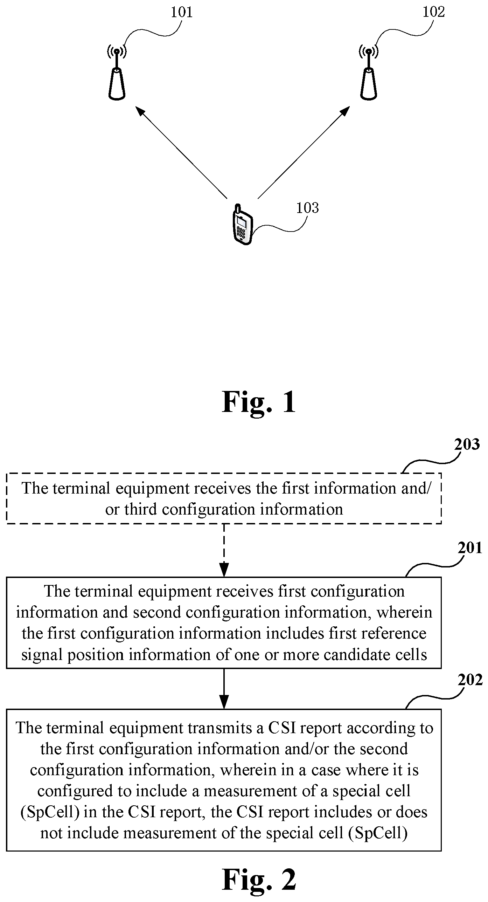

FIG. 1 is a schematic diagram of a communication system of the embodiments of this disclosure, in which a case where a terminal equipment and network devices are taken as examples is schematically shown. As shown in FIG. 1, the communication system 100 may include a first network device 101, a second network device 102 and a terminal equipment 103. For the sake of simplicity, an example having only two network devices and one terminal equipment is schematically given in FIG. 1. However, the embodiments of this disclosure are not limited thereto.

For example, the first network device 101 is a serving cell (source cell) of the terminal equipment 103, and the second network device 102 is a cell after the terminal equipment 103 is switched (target cell).

It was found by the inventors that a terminal equipment is configured with measurement configuration information and CSI report configuration information. As the two are separately configured, the following configuration conflicts may occur: according to the CSI report configuration, the terminal equipment needs to include measurement of SSBs of a SpCell in the CSI report, however, the measurement configuration does not configure the SSBs of the SpCell for the terminal equipment, Therefore, the terminal equipment is unable to measure the SSBs of the SpCell. Such configuration conflicts will lead to indefinite equipment behaviors when the terminal equipment transmits the CSI report, thereby resulting in transmission failure of the CSI report. Such configuration conflicts are prone to occur, as the measurement configuration is configured out of a serving cell configuration (ServingCellConfig) and a candidate cell configuration, while the CSI report configuration information is configured within the serving cell configuration, and the two are separately configured.

In order to solve at least one of the above problems, embodiments of this disclosure provide a data transmission, data reception method and apparatuses thereof.

### Embodiments of a first aspect

The embodiments of this disclosure provide a data transmission method, applicable to a terminal equipment side.

FIG. 2 is a schematic diagram of the data transmission method of the embodiments of this disclosure. As shown in FIG. 2, the method includes:
201: the terminal equipment receives first configuration information and second configuration information, wherein the first configuration information includes first reference signal position information of one or more candidate cells; and
202: the terminal equipment transmits a CSI report according to the first configuration information and/or the second configuration information, wherein in a case where it is configured to include a measurement of a special cell in the channel state information report, the CSI report includes or does not include measurement of the special cell (SpCell).

Therefore, the terminal equipment receives the first configuration information and second configuration information, wherein the first configuration information includes first reference signal position information of one or more candidate cells; and transmits a channel state information report according to the first configuration information and/or the second configuration information, wherein in a case where it is configured to include a measurement of a special cell in the channel state information report, the channel state information report includes or does not include measurement of the special cell. When a configuration conflict where "the terminal equipment is configured to include measurement of SSBs of the SpCell in the CSI report, but the measurement configuration does not configure the SSBs of the SpCell for the terminal equipment" occurs, the terminal equipment determines SSBs of the SpCell according to a configuration of the SpCell when it serves as a serving cell, and includes measurement of the SSBs of the SpCell and an indication to the SpCell in the CSI report. Therefore, occurrence of indefinite equipment behaviors resulted from configuration conflicts may be avoided, and inconsistent understandings of CSI report contents by the terminal equipment and the network device may be avoided, thereby avoiding transmission failure of the CSI report.

It should be noted that FIG. 2 only schematically illustrates the embodiments of this disclosure, and the terminal equipment is taken as an example; however, this disclosure is not limited thereto. For example, an order of execution of the operations may be appropriately adjusted, and furthermore, some other operations may be added, or some operation therein may be reduced. Furthermore, objects of the above operations may be adjusted. And appropriate variants may be made by those skilled in the art according to the above contents, without being limited to what is contained in FIG. 2.

In some embodiments, for example, terms 'transmission configuration indication (TCI) state' and 'beam' may be used interchangeably; 'cell' may be equivalently replaced with 'carrier' or 'component carrier'; and "TCI state pool" may be equivalently replaced with "TCI state set" or "TCI state list". The above are exemplary explanations only, and the embodiments of this disclosure are not limited thereto.

In some embodiments, the serving cell is at least one of the following: a special cell (SpCell), an Scell, an activated cell, and a deactivated cell. Rel-18 LTM supports switch from one cell to a serving cell, an intra-frequency cell, and an inter-frequency cell. For example, a cell to which the terminal equipment may possibly be switched is referred to as a candidate cell, and a cell to which the terminal equipment is actually switched is referred to as a target cell. The candidate cell may be a serving cell, or may be a non-serving cell.

For example, reference may be made to the related art for specific limitations of the special cell (SpCell), which is not limited in this disclosure.

In some embodiments, the terminal equipment is configured with one or more candidate cells and provided with configuration information related to the candidate cells before receiving a cell switch command. And then, the cell switch command indicates the terminal equipment to switch to one or more candidate cells therein (i.e. target cells).

In some embodiments, a cell to which the terminal equipment belongs before the cell switch is referred to as "a serving cell" or "a source cell", and a cell to which the terminal equipment belongs after the cell switch is referred to as a target cell. For example, the "serving cell" transmits the cell switch command to the terminal equipment, for example, the cell switch command is carried by a media access control control element (MAC CE). Thus, cell switch is indicated by layer 1 or layer 2 signaling, Therefore, the terminal equipment may quickly switch a cell. For example, reference may be made to the related art for an MAC CE format to which the cell switch command corresponds, which is not limited in this disclosure.

In some embodiments, the first reference signal is an SSB, the first configuration information is measurement configuration information, and the second configuration information is CSI report configuration information.

For example, "the serving cell" transmits the measurement configuration information to the terminal equipment, the measurement configuration information including a candidate cell identifier, and information related to the first reference signal (e.g. the SSB) includes "first reference signal position information", which is represented by "ssb-PositionsInBurst". For example, "the serving cell" further transmits the CSI report configuration information to the terminal equipment, and for example, the terminal equipment transmits a CSI report to the serving cell according to the CSI report configuration information, the CSI report configuration information including an indication of whether the CSI report includes the measurement of the special cell (SpCell).

Table 1 schematically illustrates signaling formats of "the first configuration information" and "the second configuration information" in this disclosure.

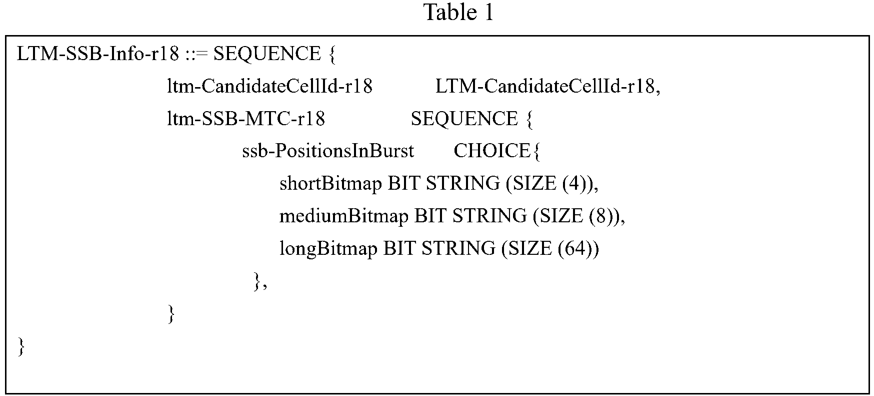

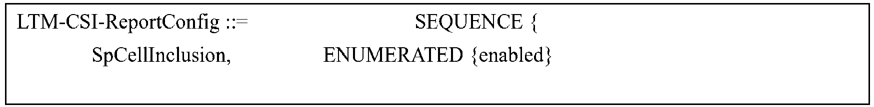

For example, as shown in Table 1, the first configuration information (measurement configuration information) of this disclosure at least includes the above information element (IE) "LTM-SSB-Info-r18". For example, as shown in Table 1, the second configuration information (CSI report configuration information) of this disclosure at least includes the above IE "LTM-CSI-ReportConfig". For example, the measurement configuration may not include the above "LTM-SSB-Info-r18", and the CSI report configuration may also not include "LTM-CSI-ReportConfig"; or, the measurement configuration may include an IE expressed differently from "LTM-SSB-Info-r18" but having a function identical thereto, and the CSI report configuration may also include an IE expressed differently from "LTM-CSI-ReportConfig" but having a function identical thereto, which is not limited in this disclosure.

The transmitting a CSI report by the terminal equipment according to the first configuration information and/or the second configuration information includes that:
for example, the measurement configuration is mainly used for configuring measurement reference signals. The terminal equipment is configured with measurement configuration information, the measurement configuration information including ssb-PositionsInBurst of the candidate cell. The candidate cell identifier is LTM-CandidateCellId (which may also be replaced with ltm-CandidateCellld), which may be a logical cell identifier or a physical cell identifier. A definition of ssb-PositionsInBurst is identical to that in existing standards, that is, it indicates a time domain position of an SSB transmitted within a half frame, which shall not be described in this disclosure in detail. The terminal equipment measures all or a part of SSBs in ssb-PositionsInBurst, and includes measured L1-RSRP in the CSI report to transmit.

In some embodiments, the terminal equipment may be "configured to include measurement of the special cell (SpCell) in the CSI report" according to the received second configuration information and/or fifth configuration information.

For example, that the terminal equipment is configured by the second configuration information to include measurement of the special cell (SpCell) in the CSI report includes that:
for example, the terminal equipment is configured via LTM-CSI-ReportConfig with the CSI report configuration information, and transmits the CSI report according to the CSI report configuration information. For example, the terminal equipment measures SSBs of M candidate cells, and includes measurements of N (N ≤ M) candidate cells in the CSI report, that is, it selects N candidate cells from the M candidate cells for reporting. The terminal equipment may be configured to always include measurement of the SpCell in the CSI report, such as enabling this function via an IE "SpCellInclusion" in Table 1. If the function is disenabled, the selected N cells may include the SpCell, or may not include the SpCell, and if this function is enabled, the selected N cells must include the SpCell. The SpCell refers to an SpCell to which the terminal equipment belongs before the cell switch.

For example, that the terminal equipment is configured by the fifth configuration information to include measurement of the special cell (SpCell) in the CSI report includes that:
in some embodiments, the method further includes: receiving the fifth configuration information, wherein the fifth configuration information configures to include measurement of the special cell (SpCell) in the CSI report.

In some embodiments, the fifth configuration information is included in the second configuration information.

For example, the fifth configuration information configures 'to include measurement of the special cell (SpCell) in the CSI report' per CSI report.

For example, as shown in Table 1, taking that the fifth configuration information is "SpCellInclusion" as an example, wherein "SpCellInclusion" is configured per CSI report, different CSI reports may have different configurations, that is, some CSI reports may be configured to include measurement of the SpCell, and some CSI reports may be configured not to include measurement of the SpCell. Consequently, flexibility of configurations of CSI reports is higher.

In some embodiments, the fifth configuration information configures 'to include measurement of the special cell (SpCell) in the CSI report' per UE.

For another example, taking that the fifth configuration information is "SpCellInclusion" as an example, "SpCellInclusion" may be configured per UE, such as being configured out of "LTM-CSI-ReportConfig" in Table 1. In this case, all CSI reports of the terminal equipment have identical configurations, that is, all the CSI reports of the terminal equipment include measurement of the SpCell, or all the CSI reports of the terminal equipment do not include measurement of the SpCell. Consequently, every CSI report is treated equally, making it easy to process different CSI reports uniformly and saving signaling overhead.

Thus, the terminal equipment may be configured to include measurement of the special cell (SpCell) in the CSI report according to the second configuration information and/or the fifth configuration information, and transmit the CSI report according to configurations of the second configuration information and/or the fifth configuration information.

Relevant configurations of "the first configuration information", "the second configuration information", and "fifth configuration information", etc., are determined above. That "the CSI report includes measurement of the special cell (SpCell)" shall be described below by way of examples.

In some embodiments, the first configuration information includes the first reference signal position information of the special cell (SpCell), and the CSI report includes measurement of the special cell (SpCell). In some embodiments, the first reference signal position information is indicated by a field ssb-PositionsInBurst.

For example, the terminal equipment is configured to include measurement of the SpCell in the CSI report, such as by enabling "SpCellInclusion" in Table 1, the N cells selected by the terminal equipment from the M candidate cells must include the SpCell, and that "the selected N cells must include the SpCell" means that the terminal equipment must measure SSBs of the SpCell. As the SSBs of the SpCell come from ssb-PositionsInBurst of the SpCell, it is required that the measurement configuration information must include ssb-PositionsInBurst of the SpCell. If the terminal equipment is configured to include measurement of the SpCell in the CSI report, the measurement configuration information must include ssb-PositionsInBurst of the SpCell, in other words, taking the SpCell as a candidate cell, when configuring ssb-PositionsInBurst of the SpCell in the measurement configuration, ssb-PositionsInBurst of the SpCell is also configured.

Therefore, generation of configuration conflicts may be avoided, and inconsistent understandings of CSI report contents by the terminal equipment and the network device may be avoided, thereby avoiding transmission failure of the CSI report.

In some embodiments, the method further includes: 203: the terminal equipment receives the first information and/or third configuration information.

In some embodiments, in the case where the first configuration information does not include the first reference signal position information of the special cell (SpCell), the first reference signal position information of the special cell (SpCell) is determined according to the first reference signal position information in the first information or the third configuration information, and the CSI report includes measurement of the special cell (SpCell).

In some embodiments, the first information is carried by system information, and the third configuration information is carried by an RRC message, the system information including SIB 1, and the RRC message including 'ServingCellConfigCommon'.

In some embodiments, the first information and/or the third configuration information is/are a parameter/parameters configured for the special cell (SpCell). For example, SIB1 and/or ServingCellConfigCommon is/are a parameter/parameters configured for the SpCell.

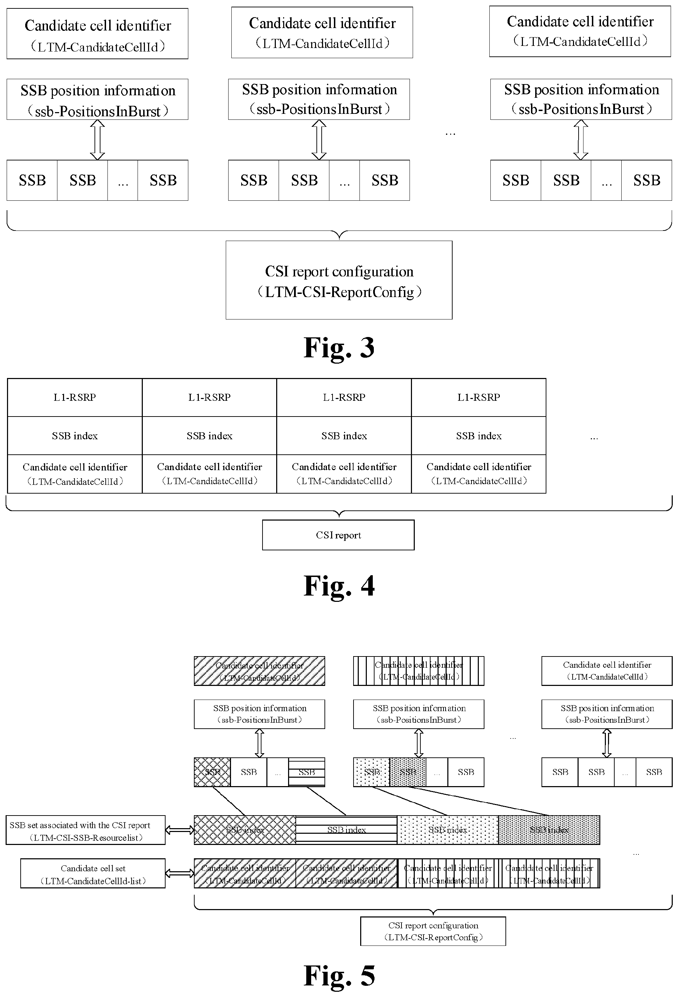

FIG. 3 is an exemplary diagram of a CSI report configuration of the embodiments of this disclosure.

For example, as shown in FIG. 3, a CSI report configuration is associated with ssb-PositionsInBurst of the M candidate cells (identified by LTM-CandidateCellId), and the CSI report includes measurement of SSBs of N (N≤M) candidate cells therein. For example, the terminal equipment is configured to include measurement of the SpCell in the CSI report, but the measurement configuration does not configure ssb-PositionsInBurst of the SpCell. In this case, the terminal equipment determines ssb-PositionsInBurst of the SpCell according to configurations existed when the SpCell serves as a serving cell. For example, ssb-PositionsInBurst in SIB1 or "ServingCellConfigCommon" is taken as ssb-PositionsInBurst of the SpCell. For example, in a case where both SIB1 and "ServingCellConfigCommon" configure ssb-PositionsInBurst, the terminal equipment determines ssb-PositionsInBurst of the SpCell according to ssb-PositionsInBurst configured by "ServingCellConfigCommon".

For example, the terminal equipment measures one or more SSBs in ssb-PositionsInBurst of the SpCell and the M candidate cells, and includes measurements of SSBs in N cells in the CSI report, wherein one of the N cells must be an SpCell.

Therefore, the terminal equipment may determine ssb-PositionsInBurst of the SpCell, so that even if configuration conflicts are generated, measurement of the SpCell may be included in the CSI report, thereby avoiding inconsistent understandings of CSI report contents by the terminal equipment and the network device, and avoiding transmission failure of the CSI report.

In some embodiments, the candidate cell identifier of the special cell (SpCell) is a specific value. In some embodiments, the specific value is 0.

For example, the terminal equipment is configured to include measurement of the SpCell in the CSI report, and in a case where the measurement configuration does not configure ssb-PositionsInBurst of the SpCell, the terminal equipment takes ssb-PositionsInBurst in SIB1 or ServingCellConfigCommon as ssb-PositionsInBurst of the SpCell, and deems that the candidate cell identifier of the SpCell is a specific value, that is, deems that LTM-CandidateCellId of the SpCell is a fixed value.

For example, the specific value described above is a reserved value for specific use by the SpCell when configuration conflicts occur. For example, the specific value is 0, a range of values of LTM-CandidateCellId is [1, Nmax], and LTM-CandidateCellId may use the specific value 0 only when configuration conflicts occur. In other cases, a value of LTM-CandidateCellId satisfies 1 ≤LTM-CandidateCellId≤Nmax.

In some embodiments, transmitting the CSI report includes that: the CSI report includes the candidate cell identifier of the special cell (SpCell).

FIG. 4 is an exemplary diagram of the CSI report of the embodiments of this disclosure.

For example, as shown in FIG. 4, the terminal equipment includes L1-RSRP, an SSB index and the candidate cell identifier (LTM-CandidateCellId) in the CSI report to indicate that, for example, L1-RSRP #1 is SSB measurement for the candidate cell with a candidate cell identifier LTM-CandidateCellId#1 and an SSB index of SSB index#1. In such a CSI report format, when L1-RSRP for the SpCell is reported, a specific value is reported to be taken as the candidate cell identifier of the SpCell. This is because, according to Table 1, if the measurement configuration does not configure ssb-PositionsInBurst for the SpCell (e.g. does not configure LTM-SSB-Info-r18 for the SpCell), LTM-CandidateCellId is not configured for the SpCell, and both the terminal equipment and the network device use a specific value to avoid ambiguities.

Thus, both the terminal equipment and the network device are able to determine the candidate cell identifier of the SpCell, thereby unifying understandings of CSI report contents by the terminal equipment and the network device, and avoiding transmission failure of the CSI report.

In some embodiments, the terminal equipment may also determine the SSBs in SpCell via "a first reference signal set associated with the CSI report", which shall be exemplified below respectively.

In some embodiments, the method further includes: receiving fourth configuration information, wherein the fourth configuration information configures a first reference signal set associated with the CSI report.

In some embodiments, the fourth configuration information configures the first reference signal of the special cell (SpCell) in the first reference signal set according to the candidate cell identifier of the special cell (SpCell).

FIG. 5 is another exemplary diagram of the CSI report configuration of the embodiments of this disclosure.

For example, as shown in FIG. 5, the terminal equipment is configured with an SSB set (LTM-CSI-SSB-Resourcelist) associated with the CSI report. More specifically, a CSI report configuration is not directly associated with SSB position information (ssb-PositionsInBurst) of the M candidate cells, but is associated with LTM-CSI-SSB-Resourcelist. The SSB set represented by LTM-CSI-SSB-Resourcelist includes a part or all of SSBs in ssb-PositionsInBurst of the M candidate cells. A candidate cell set (LTM-CandidateCellId-list) is an LTM-CandidateCellId set, and elements in the LTM-CandidateCellId set correspond one-to-one with elements in the SSB set, and are used to identify candidate cells to which the SSBs belong.

For example, the terminal equipment is configured with a candidate cell set and an SSB set associated with the CSI report, wherein the candidate cell set contains multiple candidate cell identifiers, each candidate cell identifier corresponding to an SSB index in the SSB set. For example, the candidate cell identifier of the SpCell corresponds to an SSB of the SpCell, and the terminal equipment may determine the SSB of the SpCell according to the candidate cell identifier of SpCell, so as to perform measurement.

For example, first two LTM-CandidateCellId of the candidate cell set shown in FIG. 5 are candidate cell identifiers of the SpCell, such as a specific value of "0", and correspond to first two SSB indices of the SSB set, such as SSB index #1 and SSB index #2, wherein SSB index #1 and SSB index #2 are included in the same "ssb-PositionsInBurst", Therefore, the terminal equipment does not need to measure all SSBs in "ssb-PositionsInBurst", but only needs to measure SSB index #1 and SSBindex #2, thereby further reducing power consumption of the terminal equipment.

Table 2 schematically explains signaling formats of LTM-CSI-SSB-Resourcelist and LTM-CandidateCellId-list.

For example, the terminal equipment is configured to include measurement of the SpCell in the CSI report, but the measurement configuration does not include ssb-PositionsInBurst of the SpCell. In this case, the candidate cell identifier LTM-CSI-SSB-Resourcelist of the SpCell may be used to configure the SSBs of the SpCell, such as configuring one or more LTM-CandidateCellId with a value of 0 (i.e. the specific value described above) in LTM-CandidateCellId-list, and configuring SSB indices associated with these LTM-CandidateCellId in LTM-CSI-SSB-Resourcelist, and these SSB indices are SSB indices in ssb-PositionsInBurst of the SpCell. Although the measurement configuration does not include ssb-PositionsInBurst of the SpCell, it is still possible to achieve the goal to configure the SSBs of the SpCell in LTM-CSI-SSB-Resourcelist by taking ssb-PositionsInBurst in SIB1 or ServingCellConfigCommon as ssb-PositionsInBurst of the SpCell and identifying the SpCell with LTM-CandidateCellId with a value of 0.

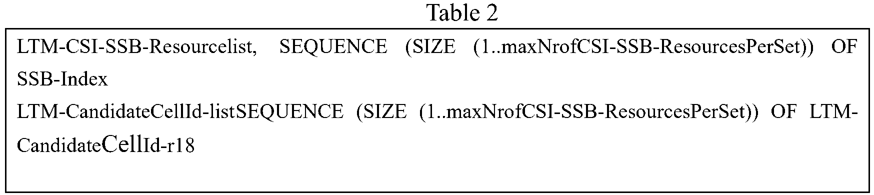

In some embodiments, the fourth configuration information is included in the second configuration information.

Table 3 further schematically explains signaling formats of LTM-CSI-SSB-Resourcelist and LTM-CandidateCellId-list.

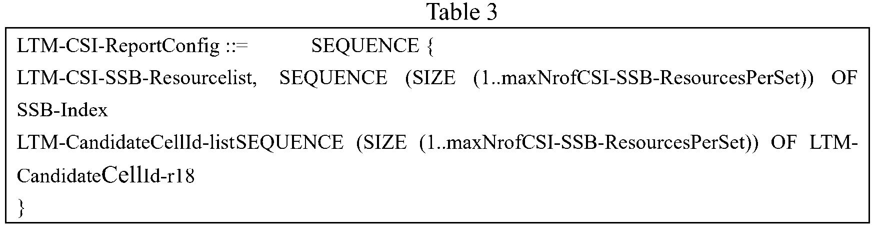

For example, as shown in Table 3, "the SSB set associated with the CSI report (LTM-CSI-SSB-Resourcelist) and the candidate cell identifier set (LTM-CandidateCellId-list" (corresponding to the fourth configuration information) in FIG. 5 are configured in the CSI report configuration (LTM-CSI-ReportConfig) (corresponding to the second configuration information).

In some embodiments, the first reference signal set includes the first reference signal of the special cell (SpCell), and the channel state information report includes measurement of the special cell.

For example, if SpCellInclusion is configured, LTM-CSI-SSB-Resourcelist must include the SSB index of the SpCell.

For example, if "SpCellInclusion" in Table 1 is configured as "enabled", the N cells selected by the terminal equipment from the M candidate cells must include the SpCell. That "the selected N cells must include the SpCell" means that the terminal equipment must measure the SSBs of the SpCell. Therefore, it is required that the first reference signal set must include the first reference signal of the special cell (SpCell). For example, "LTM-CSI-SSB-Resourcelist" must include the SSB index of the SpCell.

Therefore, by configuring the SSB set associated with the CSI report, the number of SSBs that the terminal equipment needs to measure may be reduced. Even if ssb-PositionsInBurst of the SpCell is not configured in the measurement configuration, the SSBs of the SpCell may be configured in the SSB set associated with the CSI report, so that the terminal equipment is able to include measurement of the SpCell in the CSI report, thereby avoiding transmission failure of the CSI report caused by configuration conflicts.

In some embodiments, in the case where the first reference signal set does not include the first reference signal of the special cell (SpCell), it is deemed that the first reference signal set includes the determined first reference signal position information of the special cell (SpCell), and the CSI report includes measurement of the special cell (SpCell), wherein the first reference signal position information of the special cell (SpCell) is determined according to at least one of the following: first reference signal position information in the first information, first reference signal position information in the third configuration information, or first reference signal position information of the special cell in the first configuration information.

For example, the terminal equipment is configured to include measurement of the SpCell in the CSI report, in which case even if LTM-CSI-SSB-Resourcelist does not include the SSBs of the SpCell, the terminal equipment deems that LTM-CSI-SSB-Resourcelist includes the SSBs of the SpCell, and furthermore, the terminal equipment deems that LTM-CSI-SSB-Resourcelist includes all SSBs in ssb-PositionsInBurst of the SpCell. In the case where the measurement configuration information does not include ssb-PositionsInBurst of the SpCell, the terminal equipment takes ssb-PositionsInBurst in SIB1 or ServingCellConfigCommon as ssb-PositionsInBurst of the SpCell, and in a case where the measurement configuration information includes ssb-PositionsInBurst of the SpCell but LTM-CSI-SSB-Resourcelist does not include the SSBs of the SpCell, the terminal equipment takes ssb-PositionsInBurst of the SpCell in the measurement configuration information as ssb-PositionsInBurst of the SpCell.

Therefore, in the case where the first reference signal set does not include the first reference signal of the special cell (SpCell), the terminal equipment is still able to determine the first reference signal of the SpCell, so that even if configuration conflicts are generated, measurement of the SpCell may be included in the CSI report, thereby avoiding inconsistent understandings of CSI report contents by the terminal equipment and the network device, and avoiding transmission failure of the CSI report.

In some embodiments, the transmitting a CSI report includes: including a first reference signal resource indicator (SSB resource indicator) in the CSI report.

In some embodiments, the first reference signal resource indicator of the first reference signal in the first reference signal position information of the special cell (SpCell) belongs to a first interval.

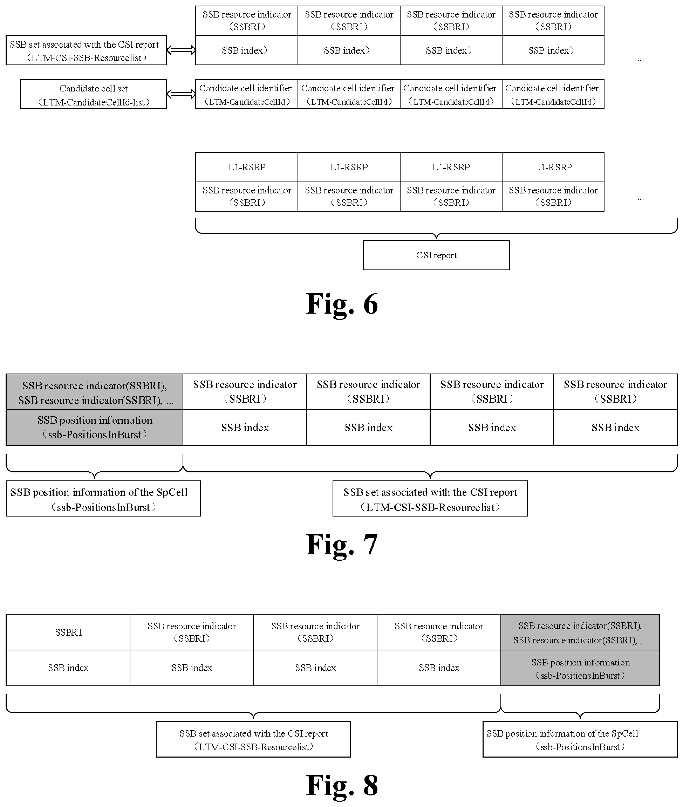

FIG. 6 is another exemplary diagram of the CSI report of the embodiments of this disclosure.

For example, as shown in FIG. 6, the terminal equipment includes L1-RSRP and the SSB resource indicator (SSBRI) in the CSI report, the SSBRI being a global index of SSBs in LTM-CSI-SSB-Resourcelist. For example, still taking FIG. 5 as an example, the SSB set associated with the CSI report (LTM-CSI-SSB-Resourcelist) contains four SSBs (corresponding to different SSB indices). For example, SSBRIs to which the SSB indices correspond from left to right are, for example, "0, 1, 2, 3", respectively. Therefore, one SSBRI may identify a candidate cell and an SSB belonging to the candidate cell. If LTM-CSI-SSB-Resourcelist does not include the SSBs of the SpCell, the SSBs of the SpCell do not have SSBRIs. In order to still be able to report the SSBs of the SpCell in such a situation, SSBRIs may be determined for the SSBs of the SpCell according to a predefined rule, so that the terminal equipment and the network device may have consistent understandings.

For example, in the case where LTM-CSI-SSB-Resourcelist does not include the SSBs of the SpCell, the terminal equipment deems that LTM-CSI-SSB-Resourcelist includes all SSBs in ssb-PositionsInBurst of the SpCell, and deems that the SSBs in ssb-PositionsInBurst and current LTM-CSI-SSB-Resourcelist are cascaded into a larger SSB set, and the SSBRI is a global index of the SSBs in the large cascaded SSB set.

In some embodiments, the first interval is determined according to a first number of minimum first reference signal resource indicators or a first number of maximum first reference signal resource indicators, wherein the first number is equal to the number of the first reference signals in the first reference signal position information of the special cell.

FIG. 7 is an exemplary diagram of the first interval of the embodiments of this disclosure, and FIG. 8 is another exemplary diagram of the first interval of the embodiments of this disclosure.

As shown in FIG. 7, ssb-PositionsInBurst of the SpCell is cascaded with LTM-CSI-SSB-Resourcelist in a "preposition" mode. As shown in FIG. 8, ssb-PositionsInBurst of the SpCell is cascaded with LTM-CSI-SSB-Resourcelist in a "postposition" mode. Assuming that the SSBRIs are numbered in an ascending order from left to right, as the SSBRIs are global indices of the large cascaded SSB set, values of the SSBRIs of the SSBs in ssb-PositionsInBurst of the SpCell will be located in a specific first interval, such as the first interval including a number of minimum SSBRIs in FIG. 7, and the first interval including a number of maximum SSBRIs in FIG. 8.

For example, assuming that the SSBRIs are numbered in an ascending order from left to right, as shown in FIG. 7, the first interval is an interval that includes S (a first number) minimum SSBRIs, and as shown in FIG. 8, the first interval is an interval that includes S maximum SSBRIs; where, S is equal to the number of the SSBs in ssb-PositionsInBurst of the SpCell, i.e. the number of SSBs transmitted in a half frame indicated by ssb-PositionsInBurst.

Therefore, in case of configuration conflicts, measurement of the SSBs of the SpCell may be included in the CSI report, which may unify understandings of CSI report contents by the terminal equipment and the network device, thereby avoiding transmission failure of the CSI report.

That "the CSI report does not include measurement of the special cell (SpCell)" shall be illustrated below.

In some embodiments, if the first configuration information does not include the first reference signal position information of the special cell (SpCell), the CSI report does not include measurement of the special cell (SpCell).

For example, although the terminal equipment is configured to include measurement of the SpCell in the CSI report, if the measurement configuration information does not include ssb-PositionsInBurst of the SpCell, the terminal equipment may ignore the configuration of "to include a measurement of the SpCell in the CSI report" and therefore not include measurement of the SpCell in the CSI report. In other words, the configuration of "to include a measurement of the SpCell in the CSI report" is overwritten. For example, "SpCellInclusion" is configured in Table 1, but "LTM-SSB-Info-r18" is not configured for the SpCell in Table 1, that is, "ssb-PositionsInBurst" of the SpCell is not configured. At this time, the CSI reporting behavior of the terminal equipment is identical to that when "SpCellInclusion" is not configured. Thus, inconsistent understandings of CSI report contents by the terminal equipment and the network device may be avoided, thereby avoiding transmission failure of the CSI report.

In some embodiments, in the case where the first reference signal set does not include the first reference signal of the special cell (SpCell), the CSI report does not include measurement of the SpCell.

For example, although the terminal equipment is configured to include measurement of the SpCell in the CSI report, if LTM-CSI-SSB-Resourcelist does not include the SSBs of the SpCell, the terminal equipment may ignore the configuration of "to include a measurement of the SpCell in the CSI report" and therefore not include measurement of the SpCell in the CSI report. Thus, inconsistent understandings of CSI report contents by the terminal equipment and the network device may be avoided, thereby avoiding transmission failure of the CSI report.

The above embodiments only illustrate the embodiments of this disclosure. However, this disclosure is not limited thereto, and appropriate variants may be made on the basis of these embodiments. For example, the above embodiments may be executed separately, or one or more of them may be executed in a combined manner.

It can be seen from the above embodiments that the terminal equipment receives the first configuration information and second configuration information, wherein the first configuration information includes first reference signal position information of one or more candidate cells; and transmits a channel state information report according to the first configuration information and/or the second configuration information, wherein in a case where it is configured to include a measurement of a special cell in the channel state information report, the channel state information report includes or does not include measurement of the special cell. Therefore, occurrence of indefinite equipment behaviors resulted from configuration conflicts may be avoided, and inconsistent understandings of CSI report contents by the terminal equipment and the network device may be avoided, thereby avoiding transmission failure of the CSI report.

### Embodiments of a second aspect

The embodiments of this disclosure provide a data reception method, applicable to a network device side. The embodiments of this disclosure may be combined with the embodiments of the first aspect, or may be implemented separately. Contents identical to those in the embodiments of the first aspect shall not be repeated herein any further.

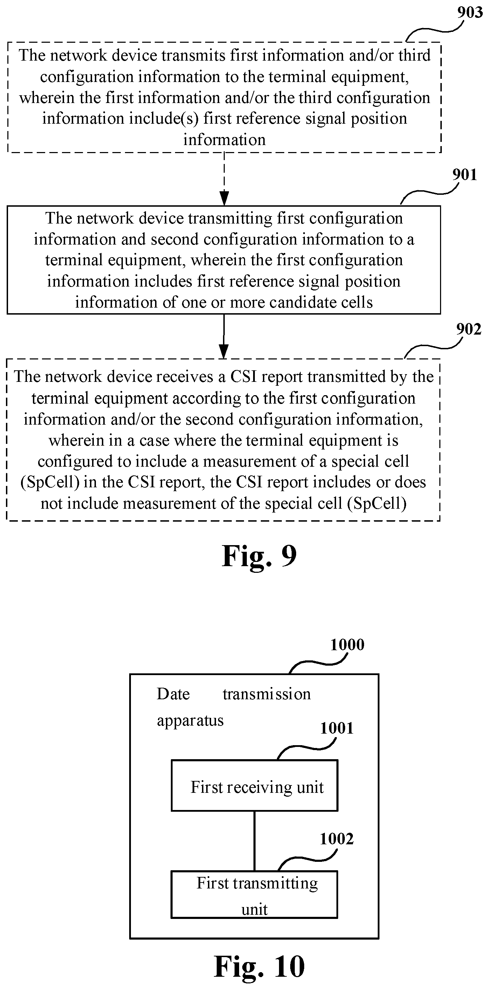

FIG. 9 is a schematic diagram of the data reception method of the embodiments of this disclosure. As shown in FIG. 9, the method includes:
901: the network device transmits first configuration information and second configuration information to a terminal equipment, wherein the first configuration information includes first reference signal position information of one or more candidate cells; and
902: the network device receives a CSI report transmitted by the terminal equipment according to the first configuration information and/or the second configuration information, wherein in a case where the terminal equipment is configured to include a measurement of a special cell (SpCell) in the CSI report, the CSI report includes or does not include measurement of the special cell (SpCell).

Therefore, the terminal equipment receives the first configuration information and second configuration information, wherein the first configuration information includes first reference signal position information of one or more candidate cells; and transmits a channel state information report according to the first configuration information and/or the second configuration information, wherein in a case where it is configured to include a measurement of a special cell in the channel state information report, the channel state information report includes or does not include measurement of the special cell. Therefore, occurrence of indefinite equipment behaviors resulted from configuration conflicts may be avoided, and inconsistent understandings of CSI report contents by the terminal equipment and the network device may be avoided, thereby avoiding transmission failure of the CSI report.

In some embodiments, the term 'network device' may be, for example, equivalently replaced with 'serving cell' or 'source cell' or 'target cell'.

In some embodiments, the method further includes: 903: the network device transmits first information and/or third configuration information to the terminal equipment, wherein the first information and/or the third configuration information include(s) first reference signal position information.

In some embodiments, the first information and/or the third configuration information is/are a parameter/parameters configured for the special cell (SpCell).

In some embodiments, the method further includes: transmitting fourth configuration information to the terminal equipment, wherein the fourth configuration information configures a first reference signal set associated with the CSI report.

In some embodiments, the fourth configuration information configures the first reference signal of the special cell (SpCell) in the first reference signal set according to a candidate cell identifier of the special cell (SpCell).

In some embodiments, the fourth configuration information is included in the second configuration information.

In some embodiments, the method further includes: transmitting fifth configuration information to the terminal equipment, wherein the fifth configuration information configures to include measurement of the special cell (SpCell) in the CSI report.

In some embodiments, the fifth configuration information is included in the second configuration information.

In some embodiments, the fifth configuration information configures to include measurement of the special cell (SpCell) in the CSI report per UE.

It should be noted that FIG. 9 only schematically illustrates the embodiments of this disclosure, and the terminal equipment is taken as an example; however, this disclosure is not limited thereto. For example, an order of execution of the operations may be appropriately adjusted, and furthermore, some other operations may be added, or some operation therein may be reduced. Furthermore, objects of the above operations may be adjusted. And appropriate variants may be made by those skilled in the art according to the above contents, without being limited to what is contained in FIG. 9.

The above embodiments only illustrate the embodiments of this disclosure. However, this disclosure is not limited thereto, and appropriate variants may be made on the basis of these embodiments. For example, the above embodiments may be executed separately, or one or more of them may be executed in a combined manner.

It can be seen from the above embodiments that the terminal equipment receives the first configuration information and second configuration information, wherein the first configuration information includes first reference signal position information of one or more candidate cells; and transmits a channel state information report according to the first configuration information and/or the second configuration information, wherein in a case where it is configured to include a measurement of a special cell in the channel state information report, the channel state information report includes or does not include measurement of the special cell. Therefore, occurrence of indefinite equipment behaviors resulted from configuration conflicts may be avoided, and inconsistent understandings of CSI report contents by the terminal equipment and the network device may be avoided, thereby avoiding transmission failure of the CSI report.

### Embodiments of a third aspect

The embodiments of this disclosure provide a data transmission apparatus. The apparatus may be, for example, a terminal equipment, or one or some components or assemblies configured in the terminal equipment. Contents in the embodiments identical to those in the embodiments of the first aspect shall not be described herein any further.

FIG. 10 is a schematic diagram of the data transmission apparatus of the embodiments of this disclosure. As shown in FIG. 10, the data transmission apparatus 1000 includes:
a first receiving unit 1001 configured to receive first configuration information and second configuration information, wherein the first configuration information includes first reference signal position information of one or more candidate cells; and
a first transmitting unit 1002 configured to transmit a channel state information report according to the first configuration information and/or the second configuration information, wherein in a case where it is configured to include a measurement of a special cell in the channel state information report, the channel state information report includes or does not include measurement of the special cell.

Therefore, the terminal equipment receives the first configuration information and second configuration information, wherein the first configuration information includes first reference signal position information of one or more candidate cells; and transmits a channel state information report according to the first configuration information and/or the second configuration information, wherein in a case where it is configured to include a measurement of a special cell in the channel state information report, the channel state information report includes or does not include measurement of the special cell. Therefore, occurrence of indefinite equipment behaviors resulted from configuration conflicts may be avoided, and inconsistent understandings of CSI report contents by the terminal equipment and the network device may be avoided, thereby avoiding transmission failure of the CSI report.

In some embodiments, the first configuration information includes first reference signal position information of the special cell, and the channel state information report includes measurement of the special cell.

In some embodiments, in the case where the first configuration information does not include the first reference signal position information of the special cell, the first reference signal position information of the special cell is determined according to the first information or first reference signal position information in third configuration information, and the channel state information report includes the measurement of the special cell.

In some embodiments, a candidate cell identifier of the special cell is a specific value, the specific value being 0.

In some embodiments, the first transmitting unit 1002 is configured to include the candidate cell identifier of the special cell in the channel state information report.

In some embodiments, the first receiving unit 1001 further receives fourth configuration information, wherein the fourth configuration information configures a first reference signal set associated with the channel state information report.

In some embodiments, the fourth configuration information configures first reference signals of a special cell in the first reference signal set according to the candidate cell identifier of the special cell.

In some embodiments, the first reference signal set includes the first reference signals of the special cell, and the channel state information report includes the measurement of the special cell.

In some embodiments, in the case where the first reference signal set does not include the first reference signals of the special cell, it is deemed that the first reference signal set includes the determined first reference signal position information of the special cell, and the channel state information report includes the measurement of the special cell;
wherein the first reference signal position information of the special cell is determined according to at least one of the following:
first reference signal position information in the first information,
first reference signal position information in third configuration information, or
first reference signal position information of the special cell in the first configuration information.

In some embodiments, a first reference signal resource indicator of the first reference signals in the first reference signal position information of the special cell belongs to a first interval.

In some embodiments, the first interval is determined according to a first number of minimum first reference signal resource indicators or a first number of maximum first reference signal resource indicators, wherein the first number is equal to the number of the first reference signals in the first reference signal position information of the special cell.

In some embodiments, in the case where the first configuration information does not include the first reference signal position information of the special cell, the channel state information report does not include the measurement of the special cell.

In some embodiments, in the case where the first reference signal set does not include the first reference signal of the special cell, the channel state information report does not include the measurement of the special cell.

In some embodiments, the first information and/or the third configuration information is/are parameters configured for the special cell.

In some embodiments, the fourth configuration information is included in the second configuration information.

In some embodiments, the first receiving unit 1001 further receives fifth configuration information, wherein the fifth configuration information configures that the channel state information report includes the measurement of the special cell.

In some embodiments, the fifth configuration information is included in the second configuration information.

In some embodiments, the fifth configuration information configures to include measurement of the special cell in the CSI report per terminal equipment.

In some embodiments, the first reference signal is a SSB, the first configuration information is measurement configuration information, and the second configuration information is channel state information report configuration information, wherein the first reference signal position information is indicated by the following field: ssb-PositionsInBurst.

In some embodiments, the first information is carried by system information, and the third configuration information is carried by a radio resource control message, the system information including SIB1, and the RRC message including 'ServingCellConfigCommon'.

In some embodiments, the first reference signal position information is indicated by the following field: ssb-PositionsInBurst.

The above embodiments only illustrate the embodiments of this disclosure. However, this disclosure is not limited thereto, and appropriate variants may be made on the basis of these embodiments. For example, the above embodiments may be executed separately, or one or more of them may be executed in a combined manner.

It should be noted that the components or modules related to this disclosure are only described above. However, this disclosure is not limited thereto, and the data transmission apparatus 1000 may further include other components or modules, and reference may be made to related techniques for particulars of these components or modules.

Furthermore, for the sake of simplicity, connection relationships between the components or modules or signal profiles thereof are only illustrated in FIG. 10. However, it should be understood by those skilled in the art that such related techniques as bus connection, etc., may be adopted. And the above components or modules may be implemented by hardware, such as a processor, a memory, a transmitter, and a receiver, etc., which are not limited in the embodiments of this disclosure.

It can be seen from the above embodiments that the terminal equipment receives the first configuration information and second configuration information, wherein the first configuration information includes first reference signal position information of one or more candidate cells; and transmits a channel state information report according to the first configuration information and/or the second configuration information, wherein in a case where it is configured to include a measurement of a special cell in the channel state information report, the channel state information report includes or does not include measurement of the special cell. Therefore, occurrence of indefinite equipment behaviors resulted from configuration conflicts may be avoided, and inconsistent understandings of CSI report contents by the terminal equipment and the network device may be avoided, thereby avoiding transmission failure of the CSI report.

### Embodiments of a fourth aspect

The embodiments of this disclosure provide a data reception apparatus. The apparatus may be, for example, a network device, or one or some components or assemblies configured in the network device. Contents in the embodiments identical to those in the embodiments of the second aspect shall not be described herein any further.

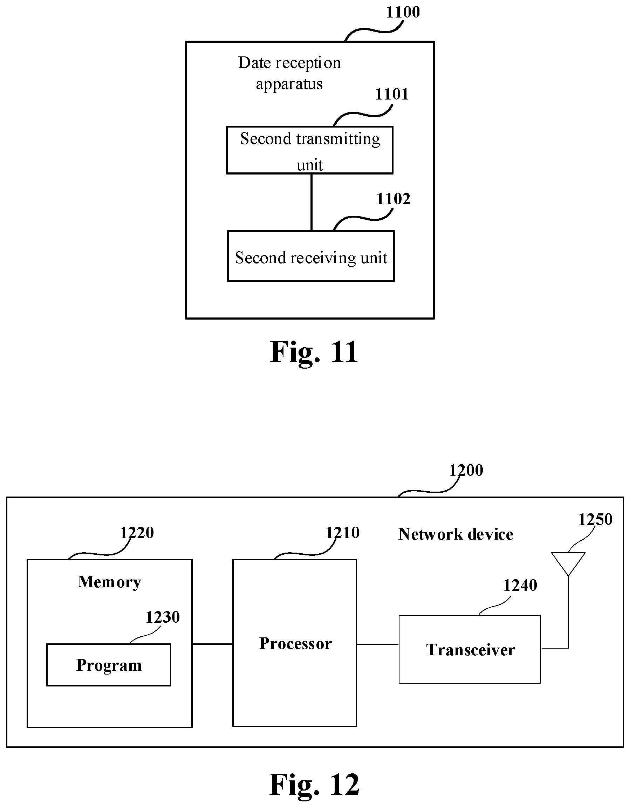

FIG. 11 is a schematic diagram of the data reception apparatus of the embodiments of this disclosure. As shown in FIG. 11, the data reception apparatus 1100 includes:
a second transmitting unit 1101 configured to transmit first configuration information and second configuration information to a terminal equipment, wherein the first configuration information includes first reference signal position information of one or more candidate cells; and
a second receiving unit 1102 configured to receive a channel state information report transmitted by the terminal equipment according to the first configuration information and/or the second configuration information, wherein in a case where the terminal equipment is configured to include a measurement of a special cell in the channel state information report, the channel state information report includes or does not include measurement of the special cell.

Therefore, occurrence of indefinite equipment behaviors resulted from configuration conflicts may be avoided, and inconsistent understandings of CSI report contents by the terminal equipment and the network device may be avoided, thereby avoiding transmission failure of the CSI report.

In some embodiments, the second transmitting unit 1101 further transmits first information and/or third configuration information to the terminal equipment, wherein the first information and/or the third configuration information include(s) first reference signal position information.

In some embodiments, the first information and/or the third configuration information is/are a parameter/parameters configured for the special cell (SpCell).

In some embodiments, the second transmitting unit 1101 further transmits fourth configuration information to the terminal equipment, wherein the fourth configuration information configures a first reference signal set associated with the CSI report.

In some embodiments, the fourth configuration information configures the first reference signal of the special cell (SpCell) in the first reference signal set according to a candidate cell identifier of the special cell (SpCell).

In some embodiments, the fourth configuration information is included in the second configuration information.

In some embodiments, the second transmitting unit 1101 further transmits fifth configuration information to the terminal equipment, wherein the fifth configuration information configures to include measurement of the special cell (SpCell) in the CSI report.

In some embodiments, the fifth configuration information is included in the second configuration information.

In some embodiments, the fifth configuration information configures to include measurement of the special cell (SpCell) in the CSI report per UE.

In some embodiments, the first reference signal is a SSB, the first configuration information is measurement configuration information, and the second configuration information is channel state information report configuration information, wherein the first reference signal position information is indicated by the following field: ssb-PositionsInBurst.

In some embodiments, the first information is carried by system information, and the third configuration information is carried by a radio resource control message, the system information including SIB1, and the RRC message including 'ServingCellConfigCommon'.

The above embodiments only illustrate the embodiments of this disclosure. However, this disclosure is not limited thereto, and appropriate variants may be made on the basis of these embodiments. For example, the above embodiments may be executed separately, or one or more of them may be executed in a combined manner.

It should be noted that the components or modules related to this disclosure are only described above. However, this disclosure is not limited thereto, and the data reception apparatus 1100 may further include other components or modules, and reference may be made to related techniques for particulars of these components or modules.

Furthermore, for the sake of simplicity, connection relationships between the components or modules or signal profiles thereof are only illustrated in FIG. 11. However, it should be understood by those skilled in the art that such related techniques as bus connection, etc., may be adopted. And the above components or modules may be implemented by hardware, such as a processor, a memory, a transmitter, and a receiver, etc., which are not limited in the embodiments of this disclosure.

It can be seen from the above embodiments that the terminal equipment receives the first configuration information and second configuration information, wherein the first configuration information includes first reference signal position information of one or more candidate cells; and transmits a channel state information report according to the first configuration information and/or the second configuration information, wherein in a case where it is configured to include a measurement of a special cell in the channel state information report, the channel state information report includes or does not include measurement of the special cell. Therefore, occurrence of indefinite equipment behaviors resulted from configuration conflicts may be avoided, and inconsistent understandings of CSI report contents by the terminal equipment and the network device may be avoided, thereby avoiding transmission failure of the CSI report.

### Embodiments of a fifth aspect

The embodiments of this disclosure provide a communication system, and reference may be made to FIG. 1, with contents identical to those in the embodiments of the first to the fourth aspects being not going to be described herein any further.

In some embodiments, the communication system 100 may at least include a network device and a terminal equipment, wherein,
the network device is configured to transmit first configuration information and second configuration information, wherein the first configuration information includes first reference signal position information of one or more candidate cells;
and the terminal equipment is configured to receive the first configuration information and second configuration information, and transmit a channel state information report according to the first configuration information and/or the second configuration information, wherein in a case where it is configured to include a measurement of a special cell in the channel state information report, the channel state information report includes or does not include measurement of the special cell.

Thus, the terminal equipment receives the first configuration information and second configuration information, wherein the first configuration information includes first reference signal position information of one or more candidate cells; and transmits a channel state information report according to the first configuration information and/or the second configuration information, wherein in a case where it is configured to include a measurement of a special cell in the channel state information report, the channel state information report includes or does not include measurement of the special cell. Therefore, occurrence of indefinite equipment behaviors resulted from configuration conflicts may be avoided, and inconsistent understandings of CSI report contents by the terminal equipment and the network device may be avoided, thereby avoiding transmission failure of the CSI report.

The embodiments of this disclosure further provide a network device, which may be, for example, a base station. However, this disclosure is not limited thereto, and it may also be another network device.

FIG. 12 is a schematic diagram of a structure of the network device of the embodiments of this disclosure. As shown in FIG. 12, the network device 1200 may include a processor 1210 (such as a central processing unit (CPU)) and a memory 1220, the memory 1220 being coupled to the processor 1210. Wherein, the memory 1220 may store various data, and furthermore, it may store a program 1230 for information processing, and execute the program 1230 under control of the processor 1210.

Furthermore, as shown in FIG. 12, the network device 1200 may include a transceiver 1240, and an antenna 1250, etc. Wherein, functions of the above components are similar to those in the related art, and shall not be described herein any further. It should be noted that the network device 1200 does not necessarily include all the parts shown in FIG. 12, and furthermore, the network device 1200 may include parts not shown in FIG. 12, and the related art may be referred to.

The embodiments of this disclosure further provide a terminal equipment; however, this disclosure is not limited thereto, and it may also be another equipment.

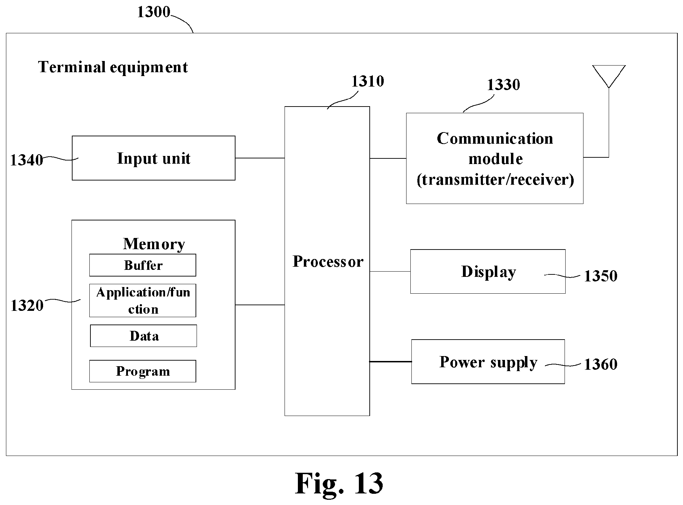

FIG. 13 is a schematic diagram of the terminal equipment of the embodiments of this disclosure. As shown in FIG. 13, the terminal equipment 1300 may include a processor 1310 and a memory 1320, the memory 1320 storing data and a program and being coupled to the processor 1310. It should be noted that this figure is illustrative only, and other types of structures may also be used, so as to supplement or replace this structure and achieve a telecommunications function or other functions.

For example, the processor 1310 may be configured to execute a program to carry out the data transmission method as described in the embodiments of the first aspect. For example, the processor 1310 may be configured to execute the following control: receiving first configuration information and second configuration information, wherein the first configuration information includes first reference signal position information of one or more candidate cells; and transmitting a channel state information report according to the first configuration information and/or the second configuration information, wherein in a case where it is configured to include a measurement of a special cell in the channel state information report, the channel state information report includes or does not include measurement of the special cell.

As shown in FIG. 13, the terminal equipment 1300 may further include a communication module 1330, an input unit 1340, a display 1350, and a power supply 1360; wherein functions of the above components are similar to those in the related art, which shall not be described herein any further. It should be noted that the terminal equipment 1300 does not necessarily include all the parts shown in FIG. 13, and the above components are not necessary. Furthermore, the terminal equipment 1300 may include parts not shown in FIG. 13, and the related art may be referred to.

Embodiments of this disclosure provide a computer program, which, when executed in a terminal equipment, will cause the terminal equipment to carry out the data transmission method as described in the embodiments of the first aspect.

Embodiments of this disclosure provide a storage medium, including a computer program, which will cause a terminal equipment to carry out the data transmission method as described in the embodiments of the first aspect.

Embodiments of this disclosure provide a computer program, which, when executed in a terminal equipment, will cause the terminal equipment to carry out the data reception method as described in the embodiments of the second aspect.

Embodiments of this disclosure provide a storage medium, including a computer program, which will cause a terminal equipment to carry out the data reception method as described in the embodiments of the second aspect.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. Such software modules may respectively correspond to the steps shown in the drawings. And the hardware module, for example, may be carried out by firming the soft modules by using a field programmable gate array (FPGA).

The soft modules may be located in an RAM, a flash memory, an ROM, an EPROM, and EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of the present invention. Various variants and modifications may be made by those skilled in the art according to the spirits and principle of the present invention, and such variants and modifications fall within the scope of the present invention.

As to implementations containing the above embodiments, following supplements are further disclosed.
1. A data transmission method, applicable to a terminal equipment, the method including:
   receiving first configuration information and second configuration information, wherein the first configuration information includes first reference signal position information of one or more candidate cells; and
   transmitting a CSI report according to the first configuration information and/or the second configuration information, wherein in a case where it is configured to include a measurement of a special cell in the channel state information report, the CSI report includes or does not include measurement of the special cell (SpCell).
2. The method according to supplement 1, wherein the first configuration information includes first reference signal position information of the special cell (SpCell), and the CSI report includes measurement of the special cell (SpCell).
3. The method according to supplement 1, wherein in the case where the first configuration information does not include the first reference signal position information of the special cell (SpCell), the first reference signal position information of the special cell (SpCell) is determined according to the first information or first reference signal position information in third configuration information, and the CSI report includes the measurement of the special cell (SpCell).
4. The method according to supplement 3, wherein a candidate cell identifier of the special cell (SpCell) is a specific value.
5. The method according to supplement 4, wherein the specific value is 0.
6. The method according to supplement 3, wherein the transmitting the CSI report includes: including the candidate cell identifier of the special cell (SpCell) in the CSI report.
7. The method according to supplement 1 or 3, wherein the method further includes:
   receiving fourth configuration information, wherein the fourth configuration information configures a first reference signal set associated with the channel state information report.
8. The method according to supplement 7, wherein the fourth configuration information configures first reference signals of a special cell (SpCell) in the first reference signal set according to the candidate cell identifier of the special cell (SpCell).
9. The method according to supplement 7, wherein the first reference signal set includes the first reference signals of the special cell (SpCell), and the channel state information report includes the measurement of the special cell.
10. The method according to supplement 7, wherein in the case where the first reference signal set does not include the first reference signals of the special cell (SpCell), it is deemed that the first reference signal set includes the determined first reference signal position information of the special cell (SpCell), and the CSI report includes the measurement of the special cell (SpCell);
   wherein the first reference signal position information of the special cell (SpCell) is determined according to at least one of the following:
   first reference signal position information in the first information,
   first reference signal position information in third configuration information, or
   first reference signal position information of the special cell (SpCell) in the first configuration information.
11. The method according to supplement 10, wherein a first reference signal resource indicator of the first reference signals in the first reference signal position information of the special cell (SpCell) belongs to a first interval.
12. The method according to supplement 11, wherein the first interval is determined according to a first number of minimum first reference signal resource indicators or a first number of maximum first reference signal resource indicators, wherein the first number is equal to the number of the first reference signals in the first reference signal position information of the special cell (SpCell).
13. The method according to supplement 1, wherein in the case where the first configuration information does not include the first reference signal position information of the special cell (SpCell), the CSI report does not include the measurement of the special cell (SpCell).
14. The method according to supplement 7, wherein in the case where the first reference signal set does not include the first reference signal of the special cell (SpCell), the CSI report does not include the measurement of the special cell (SpCell).
15. The method according to supplement 3, wherein the first information and/or the third configuration information is/are parameters configured for the special cell (SpCell).
16. The method according to supplement 7, wherein the fourth configuration information is included in the second configuration information.
17. The method according to any one of supplements 1-16, wherein the method further includes:
   receiving fifth configuration information, wherein the fifth configuration information configures to include measurement of the special cell (SpCell) in CSI report.
18. The method according to supplement 17, wherein the fifth configuration information is included in the second configuration information.
19. The method according to supplement 17, wherein the fifth configuration information configures to include measurement of the special cell (SpCell) in CSI report per terminal equipment.
20. The method according to any one of supplements 1-19, wherein the first reference signal is an SSB, the first configuration information is measurement configuration information, and the second configuration information is CSI report configuration information.
21. The method according to any one of supplements 1-20, wherein the first reference signal position information is indicated by the following field: ssb-PositionsInBurst.
22. The method according to supplement 3 or 10 or 15, wherein the first information is carried by system information, and the third configuration information is carried by an RRC message, the system information including SIB1, and the RRC message including 'ServingCellConfigCommon'.
23. A data reception method, applicable to a network device, the method including:
   transmitting first configuration information and second configuration information to a terminal equipment, wherein the first configuration information includes first reference signal position information of one or more candidate cells; and
   receiving a CSI report transmitted by the terminal equipment according to the first configuration information and/or the second configuration information, wherein in a case where the terminal equipment is configured to include a measurement of a special cell (SpCell) in the CSI report, the CSI report includes or does not include measurement of the special cell (SpCell).
24. The method according to supplement 23, wherein the method further includes:
   transmitting first information and/or third configuration information to the terminal equipment, wherein the first information and/or the third configuration information include(s) first reference signal position information.
25. The method according to supplement 24, wherein the first information and/or the third configuration information is/are a parameter/parameters configured for the special cell (SpCell).
26. The method according to supplement 23, wherein the method further includes:
   transmitting fourth configuration information to the terminal equipment, wherein the fourth configuration information configures a first reference signal set associated with the CSI report.
27. The method according to supplement 26, wherein the fourth configuration information configures the first reference signal of the special cell (SpCell) in the first reference signal set according to a candidate cell identifier of the special cell (SpCell).
28. The method according to supplement 23, wherein the fourth configuration information is included in the second configuration information.
29. The method according to supplement 23, wherein the method further includes:
   transmitting fifth configuration information to the terminal equipment, wherein the fifth configuration information configures to include measurement of the special cell (SpCell) in the CSI report.
30. The method according to supplement 29, wherein the fifth configuration information is included in the second configuration information.
31. The method according to supplement 29, wherein the fifth configuration information configures to include measurement of the special cell (SpCell) in the CSI report per UE.
32. A terminal equipment, including a memory and a processor, the memory storing a computer program, and the processor being configured to execute the computer program to carry out the method as described in any one of supplements 1-22.
33. A network device, including a memory and a processor, the memory storing a computer program, and the processor being configured to execute the computer program to carry out the method as described in any one of supplements 23-31.
34. A communication system, including:
   a network device configured to transmit first configuration information and second configuration information, wherein the first configuration information includes first reference signal position information of one or more candidate cells; and
   a terminal equipment configured to receive the first configuration information and second configuration information, and transmit a channel state information report according to the first configuration information and/or the second configuration information, wherein in a case where it is configured to include a measurement of a special cell in the channel state information report, the channel state information report includes or does not include measurement of the special cell.

## Claims

1. A data transmission apparatus, configured in a terminal equipment, wherein the data transmission apparatus comprises:
a first receiving unit configured to receive first configuration information and second configuration information, wherein the first configuration information comprises first reference signal position information of one or more candidate cells; and
a first transmitting unit configured to transmit a channel state information report according to the first configuration information and/or the second configuration information, wherein in a case where it is configured to comprise a measurement of a special cell in the channel state information report, the channel state information report comprises or does not comprise measurement of the special cell.

2. The apparatus according to claim 1, wherein the first configuration information comprises first reference signal position information of the special cell, and the channel state information report comprises the measurement of the special cell.

3. The apparatus according to claim 1, wherein in the case where the first configuration information does not comprise the first reference signal position information of the special cell, the first reference signal position information of the special cell is determined according to first information or first reference signal position information in third configuration information, and the channel state information report comprises the measurement of the special cell.

4. The apparatus according to claim 3, wherein a candidate cell identifier of the special cell is a specific value, the specific value being 0.

5. The apparatus according to claim 3, wherein the first transmitting unit is configured to comprise the candidate cell identifier of the special cell in the channel state information report.

6. The apparatus according to claim 3, wherein the first receiving unit further, receives fourth configuration information, wherein the fourth configuration information configures a first reference signal set associated with the channel state information report.

7. The apparatus according to claim 6, wherein the fourth configuration information configures first reference signals of a special cell in the first reference signal set according to the candidate cell identifier of the special cell.

8. The apparatus according to claim 6, wherein the first reference signal set comprises first reference signals of the special cell, and the channel state information report comprises the measurement of the special cell.

9. The apparatus according to claim 6, wherein in the case where the first reference signal set does not comprise first reference signals of the special cell, it is deemed that the first reference signal set comprises the determined first reference signal position information of the special cell, and the channel state information report comprises the measurement of the special cell;
wherein the first reference signal position information of the special cell is determined according to at least one of the following:
first reference signal position information in first information,
first reference signal position information in third configuration information, or
first reference signal position information of the special cell in the first configuration information.

10. The apparatus according to claim 9, wherein a first reference signal resource indicator of the first reference signals in the first reference signal position information of the special cell belongs to a first interval.

11. The apparatus according to claim 10, wherein the first interval is determined according to a first number of minimum first reference signal resource indicators or a first number of maximum first reference signal resource indicators, wherein the first number is equal to the number of the first reference signals in the first reference signal position information of the special cell.

12. The apparatus according to claim 1, wherein in the case where the first configuration information does not comprise the first reference signal position information of the special cell, the channel state information report does not comprise the measurement of the special cell.

13. The apparatus according to claim 6, wherein in the case where the first reference signal set does not comprise first reference signal of the special cell, the channel state information report does not comprise the measurement of the special cell.

14. The apparatus according to claim 3, wherein the first information and/or the third configuration information is/are parameters configured for the special cell.

15. The apparatus according to claim 6, wherein the fourth configuration information is comprised in the second configuration information.

16. The apparatus according to claim 15, wherein the first receiving unit further, receives fifth configuration information, wherein the fifth configuration information configures to comprise the measurement of the special cell in the channel state information report.

17. The apparatus according to claim 16, wherein the fifth configuration information is comprised in the second configuration information, or the fifth configuration information configures to comprise the measurement of the special cell in the channel state information report per terminal equipment.

18. The apparatus according to claim 2, wherein the first reference signal is a SSB, the first configuration information is measurement configuration information, and the second configuration information is channel state information report configuration information, wherein the first reference signal position information is indicated by the following field: ssb-PositionsInBurst.

19. The apparatus according to claim 3, wherein the first information is carried by system information, and the third configuration information is carried by a radio resource control message.

20. A data reception apparatus, configured in a network device, the data reception apparatus comprising:
a second transmitting unit configured to transmit first configuration information and second configuration information to a terminal equipment, wherein the first configuration information comprises first reference signal position information of one or more candidate cells; and
a second receiving unit configured to receive a channel state information report transmitted by the terminal equipment according to the first configuration information and/or the second configuration information, wherein in a case where the terminal equipment is configured to comprise a measurement of a special cell in the channel state information report, the channel state information report comprises or does not comprise measurement of the special cell.
